# EUROPEAN PATENT SPECIFICATION

(11) **EP 1 676 281 B1**
(45) Date of publication and mention of the grant of the patent: **14.03.2018**
(21) Application number: 04793792.5
(22) Date of filing: 13.10.2004
(51) Int. Cl.: H04L 9/08

(54) **EFFICIENT MANAGEMENT OF CRYPTOGRAPHIC KEY GENERATIONS**
EFFIZIENTE VERWALTUNG VON GENERATIONEN KRYPTOGRAPHISCHER SCHLÜSSEL
GESTION EFFICACE DE GENERATIONS DE CLES CRYPTOGRAPHIQUES

(30) Priority: 14.10.2003 US 510153 P
(43) Date of publication of application: 05.07.2006
(73) Proprietor: Selander, Göran, 117 37 Stockholm (SE); Lindholm, Fredrik, 125 74 Älvsjö (SE); Nyström, Magnus, 186 35 Vallentuna (SE); Telefonaktiebolaget LM Ericsson (publ), 164 83 Stockholm (SE)
(72) Inventor: SELANDER, Göran, 117 37 Stockholm (SE); LINDHOLM, Fredrik, 125 74 Älvsjö (SE); NYSTRÖM, Magnus, 186 35 Vallentuna (SE)
(74) Representative: Stenborg, Anders Vilhelm
(86) International application number: PCT/SE2004/001466
(87) International publication number: WO 2005/038818

(56) References cited:
- EP-A- 1 050 789
- US-A1- 2003 188 158
- MENEZES,VANSTONE,OORSCHOT: "Handbook of Applied Cryptography" 1997, CRC PRESS LLC , USA , XP002316610 page 8 - page 9 page 330 - page 331 page 490 - page 491 page 498 - page 499 page 546 - page 550 page 568

## Description

### TECHNICAL FIELD OF THE INVENTION

The present invention relates to management of cryptographic keys between entities in a communication system.

### BACKGROUND OF THE INVENTION

Information security is an area of vital importance in today's information technology society.

Cryptographic key management plays a fundamental role as the basis for a number of information security techniques including, among others, confidentiality, entity authentication, data integrity and digital signatures. For an introduction to the subject of cryptography in general and key management in particular we refer to [1] and [5] (chapter 13), respectively. Below is a summary of key management relevant for the present context, in part based on the standard reference [5].

Keying relationships generally involve at least two roles: a "producer" and a "consumer" of keying material. The objective of key management is to maintain keying relationships and keying material in a manner which counters relevant threats, such as e.g. compromise of confidentiality of secret keys. Key management is usually provided within the context of a specific security policy explicitly or implicitly defining the threats that the considered system is intended to address, e.g. by means of practices and procedures to be followed. Such a policy may include procedures or instructions for avoiding usage of a key that is no longer valid, or for other than an intended purpose.

Various techniques and protocols are available to distribute cryptographic keys, the confidentiality of which must be preserved between communicating entities. One technique is the use of *key layering,* which is a classification of keys in degrees of confidentiality mirroring the sensitivity of the data being protected:
*1. Master keys -* Long-term keys at the highest level in the hierarchy,
*2. Key-encrypting keys -* symmetric keys used for key transport or storage of other keys
*3. Data*/*session keys -* used to provide cryptographic operations on user data (e.g., encryption, and authentication). These are generally short-term keys.

The keys at one layer are often used to protect items at a lower layer. This constraint is intended to make attacks more difficult, and to limit exposure resulting from compromise of a specific key.

In addition to the key layering hierarchy mentioned above, keys may be classified based on temporal considerations. As indicated above, a security policy or an external event may necessitate change of keying material used in communication between entities. This relates to the notion of a *validity period* of a key - the time period over which it is valid for use by legitimate parties. Validity periods may e.g. serve to limit the time and information available for attacking data protected by a particular cryptographic algorithm, or to limit exposure in the case of compromise of a single key.

Except in simple systems where secret keys may remain fixed for all time, validity periods associated with keys normally require that keys be updated periodically thereby creating sequences or *generations* of keys. Updates may involve use of existing keying material to establish new keying material, use of appropriate key establishment protocols, or key layering. However, to limit exposure in case of compromise of either long-term secret keys or past session keys, certain dependencies among keying material should be avoided. For example, securing a new session key by encrypting it under the old session key is not recommended (since compromise of the old key compromises the new).

A particular case of key update that is relevant for the present invention is that of keys with overlapping validity periods, i.e. when several generations of keys need to coexist and where dependencies between keys such as indicated above must be avoided.

There may be several reasons for taking new data keys into service while old data keys remain in use. One such reason is when there is a need to increase the protection of new data but where the old data for some reason does not need the increased protection: It is easy to envisage business models which depend on the secure protection of content for a certain period but where the content later on may be compromised with limited or no financial damage, examples include news services, weather forecasts, etc.

Another reason may be relevant in the context of group key management: Assuming data securely shared between a group of entities, different entities in the group may have differing views on what constitutes the current, or latest generation key, leading to different generations of keys used by different parties in communication. While it is easy to indicate the key generation being used, it may be difficult or even undesirable to require all entities to maintain the latest generation of keys, thus making it necessary to allow some degree of parallel use of new and old keys. One example of this is a Personal Area Network (PAN) consisting of a user's devices (mobile phone, laptop, personal digital assistant, mp3-player, digital (video-) camera etc.) connected using some network technology/-ies and where the devices securely share the user's personal information, data, applications, or content, and where the user is applying a security policy of automated regular key updates. It may well be the case that some devices are turned off or otherwise not accessible during the key update, but should still be able to communicate securely with other, updated, devices before having been possible to update.

A related problem concerns dynamic group entity privileges, e.g. when a group entity becomes excluded from access to future data while still being authorized to securely write data protected for the group. One example of this situation is content protection schemes where the revocation of one device should make it impossible for that device to render new content but where old content still should be possible to share with other devices. Thus entities that have the right privileges must maintain both old and new keys to be able to take part of all communication.

In all these cases, there is a problem relating to the efficiency of managing data encrypted with different keys. Assuming a large number of key updates of this kind, where the old keys are still valid, severe storage problems may occur, in particular in small devices, such a mobile phones, portable music playing devices, sensors, and so forth, where storage space is limited.

One attempted solution to this problem is to replace the current key with the next generation key and re-encrypt all previously encrypted data with the latest generation key, thereby reducing the key storage to the latest key. However, such a solution adds the computational and distribution cost of re-encryption, which can be substantial if large amounts of data are encrypted. Moreover, it does not solve the group communication situations mentioned above, e.g. when an excluded member is no longer able to secretly write data, since it does not have access to the latest key and the other members have replaced the old keys with the latest one. Another attempt, applicable to communication environments, is to require all devices to always have access to the latest key. As indicated above, this is not practical when devices may be turned off during key updates or otherwise have difficulties to contact the key issuer.

Handbook of Applied Cryptography, pages 9, 330, 331, and 568, by A. Menezes, P. van Oorschot and S. Vanstone describes the use of one-way functions or more particularly hash functions for key derivation such that compromise of a current key does not compromise earlier keys. For example, there is mentioned a so-called forward chain with the requirement that the current key must not compromise previous or earlier keys. In addition, key separation is mentioned, including an example of non-reversible key derivation such that compromise of a derived key does not compromise the base key.

US 2003/188158 A1 relates to smart cards for payment with hierarchical session key derivation that provides security against differential power analysis.

EP 1 050 789 A1 describes how an entity is allowed to authenticate to many verifiers without having to manage a large numbers of secrets.

### SUMMARY OF THE INVENTION

The present invention overcomes these and other drawbacks of the prior art arrangements.

It is a general object of the present invention to enable efficient key updates and use of any previous generation of keys while only requiring storage of one key.

It is a particular object of the invention to provide means for group entities to communicate using any generation of keys while only requiring storage of one key in each entity.

These and other objects are met by the invention as defined by the accompanying patent claims.

A basic concept of the invention is to define a relationship between cryptographic key generations such that earlier generations of keys efficiently may be derived from later ones but not the other way around, i.e. it is infeasible to derive later generations of keys from earlier ones without extra information.

The key-consuming side comprises at least one communication device and a provider of protected data for the communication device(s), and the key-producing side comprises a key-issuing server issuing security key information to be shared by the communication device(s) and the provider of protected data.

The invention generally relates to management of generations of cryptographic key information in an information environment (such as a communications environment) comprising a key-producing side generating and distributing key information to a key-consuming side. At key update, key information of a new key generation is distributed from the key-producing side to the key-consuming side. A basic idea according to the invention is to replace, on the key-consuming side, key information of an older key generation by the key information of the new key generation, and iteratively apply, whenever necessary, a predetermined one-way key derivation function to derive key information of at least one older key generation from the key information of the new key generation*. In this way, the storage requirements on the key-consuming side can be significantly reduced. In fact, the only key that really needs to be stored by a receiving entity on the key-consuming side is the latest generation key. Older keys are efficiently derived using the key derivation function. As an example, the key derivation function may be a cryptographic hash function or similar one-way function.

Preferably, the key-producing side generates the key information of the new key generation to be distributed by iteratively applying an instance of the predetermined one-way key derivation function starting from key information of a predetermined generation, such as the key information of a master key generation or any intermediate key generation initially known only to the producing side. In this case, the producing side typically generates and stores a random "master key" and "backwardly" derives, by iterated application of the key derivation function, sufficiently many key generations for the considered application. By iteratively applying a one-way key derivation function a given number *n* of times, a first key generation may be produced from the master key. To generate a next key generation, the key-producing side simply applies the key derivation function *n-1* iterations, and so forth. This means that the producing side only has to store the master key and the current generation number.

Alternatively, the key-producing side generates key information of the new key generation by applying a trap-door function of the predetermined one-way key derivation function starting from key information of any older key generation. A function based on a public-key cryptosystem (which is a one-way function with a so-called trapdoor) could be used for this purpose. The consuming side only knows the public key, whereas the producing side may use the private key as a trapdoor to go "forward" in the chain of key generations.

In a typical application, the key-producing side comprises a key-issuing server issuing security key information to be shared by at least one communication device and a provider of protected data.

The invention is particularly useful for group key management, where the key-consuming side comprises an entire group or community of devices or entities. In general, each group entity implements an instance of the predetermined one-way key derivation function, thereby enabling group devices with access to the new key generation to communicate (e.g. to share protected content from a content provider) not only based on the new key generation, but also based on any older key generation.

The invention enables efficient discrimination of excluded devices or entities by distributing, to the remaining non-excluded devices in a group, a later key generation than that available by the excluded device(s), keeping in mind that the one-way key derivation function effectively inhibits the derivation of later key generations.

Other input parameters to the key derivation function may include an access code such as a Personal Identification Number (PIN) known by a trusted administrator/owner/user. Advantageously, the one-way key derivation function is then implemented in such a way that relevant key information is generated only if additional data in the form of a predetermined access code is applied to the key derivation function. Yet another parameter could be the generation number itself, effectively creating a new key derivation function for each key generation.

It should be understood that the key information derived by iteratively applying the one-way key derivation function may correspond directly to a cryptographic key or may alternatively be transformed into such a key. The key information may also be transformed to a set of keys, each in effect derived from a key of the previous generation.

The invention can be employed in a variety of different applications, including but not limited to Digital Rights Management in a digital content distribution system, on-line gaming, file sharing in a Local or Personal Area Network (LAN/PAN), store-and-forward applications and securing on-line sessions.

The invention offers the following advantages:
- Enables efficient storage of key generations: The only key that needs to be stored by a receiving entity is the latest generation.
- Enables keys to be efficiently generated: Iterations of an efficient function.
- Enables group entities to communicate using any key generation: Any current or previous entity in the group is addressed by selecting a sufficiently early generation of key. Using a later key provides optional discrimination of excluded entities.
- No need to ensure reception of intermediate key updates: During key update in a group scenario, some entities may have missed a key update of a particular generation. With the present invention, there is no need to keep track of any missing intermediate updates since all previous updates can be efficiently derived from a later generation key.
- Producers may implement and take advantage of the invention independently of its implementation and use by consumers.
- Allows policy-independent implementations: Different key issuers may have different policies for revocation or key validity periods without affecting the device implementation.
- Selective access to earlier key generations: The invention allows restricted access to previous generations of keys by discriminating on other parameters.

Other advantages offered by the present invention will be appreciated upon reading of the below description of the embodiments of the invention.

### BRIEF DESCRIPTION OF THE DRAWINGS

The invention, together with further objects and advantages thereof, will be best understood by reference to the following description taken together with the accompanying drawings, in which:
Fig. 1 is a schematic diagram illustrating the general key producing and key consuming roles in an exemplary information environment;
Fig. 2A illustrates a way of producing key generations on the key producing side in accordance with a preferred embodiment of the invention;
Fig. 2B illustrates a way of producing key generations on the key producing side in accordance with an alternative embodiment of the invention;
Fig. 3 illustrates a way of deriving older key generations on the key consuming side in accordance with a preferred embodiment of the invention;
Fig. 4 illustrates a scenario in which a key producer issues secret keys to be shared by a community of devices, with conventional key management; and
Fig. 5 illustrates a scenario in which a key producer issues secret keys to be shared by a community of devices, with key management in accordance with a preferred embodiment of the invention.

### DETAILED DESCRIPTION OF EMBODIMENTS OF THE INVENTION

The embodiments described below are merely given as examples, and it should be understood that the present invention is not limited thereto. Further modifications, changes, and improvements that retain the basic underlying principles disclosed and claimed herein are within the scope of the invention.

Throughout the drawings, the same reference characters will be used for corresponding or similar elements.

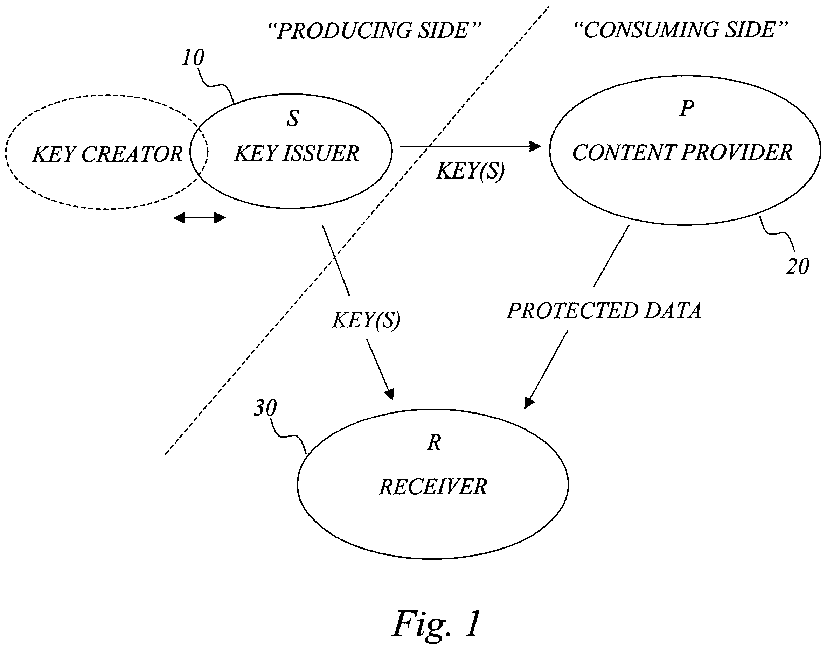

With reference to Fig. 1, consider an information environment, here exemplified in the context of a communications system with at least one secret-key issuer S such as a key issuing server, at least one content or service provider P, and at least one potential receiver R. Using the terms from the background section, S is a "producer" and P and R are "consumers" of the keying material. Any S is assumed to have an a priori secure (e.g. confidential) channel with P and R. One objective is for provider(s) P to securely and efficiently convey data to receiver(s) R using the information provided by S. Another objective is to efficiently manage the secret information in S, P and R. The secure channels between S and P, and S and R are intended for key distribution and related information such as key generation, key policies including validity periods, scope etc. The roles S and P may coincide. The role of secret-key issuer may be different from the role of secret-key creator (see below; the party having generated the master key and optionally the key generations) but that distinction is natural to make for the person skilled in the art and thus need not be explicitly stressed in the present invention.

For a better understanding of the invention, it may be useful to begin with a description of some exemplary scenarios.

### Scenario 1

*S* has generated a first generation secret key *k₁,* which is distributed securely to P and R. P has protected data *x₁* with *k₁* and sent to R, who then can make appropriate operations (decryption, verifications etc) on data *x₁* using the secret key *k₁.* At key update, next generation secret key *k₂* is distributed to P and R and subsequent data from P can be protected with a fresh key providing greater trustworthiness. The procedure is iterated for higher generation keys. An old key can still be used for the case a desired consumer doesn't have (physical or logical) access to a new key. After a number of key updates, the producer(s) and consumer(s) are facing a potential multitude of valid keys and data encrypted with various keys that all need to be securely stored and managed.

Several different procedures and orders are possible for distribution of keys and data, as is known by the person skilled in the art, such as:
1. First *k₁* is sent to R. On request of *x₁* from P by R, *k₁* is sent to P from S and *x₁* protected with *k₁* sent from P to R. At key update, *k₂* is sent to R etc.
2. On request of *x₁* from P by R, *k₁* is sent to P from S and *x₁* protected with *k₁* sent from P to R. Then *k₁* is distributed to R. On request of *x₁* from P by R, if there has been a key update, *k₂* is sent to P from S etc.

### Scenario 2

In this example, P and S coincide. In the previous example, data could be protected and distributed independently of the key distribution, e.g. in a store and forward situation. In this example, S (= P) and R wants to set up a secure communications session with key updates allowing multiple parallel sessions. Optionally embedded in a signaling protocol between S and R, S sends the first generation session key *k₁* to R over the secure channel. Using the first generation session key, S and R can exchange data securely without using the secure channel (thereby executing key layering: the a priori secure channel is one layer higher than the data channel). The secure channel is used for key updates when a new session is started. As old sessions may still be used in parallel there would potentially be a multitude of session keys to securely manage.

### Scenario 3

The case of more than one potential receiver is of special interest and is studied in detail in this scenario. By way of example, assume a scenario in which we have a group, also referred to as a community C, comprising a set of entities or devices, *d₁,* ..., *d_{N},* a secret-key issuing server *S_{C}* which issues secret keys to be shared by the community of devices and a provider *P_{C}* of protected data for this community. It is assumed that *P_{C}* and *S_{C}* collaborate, so that *S_{C}* can inform *P_{C}* about the currently valid shared secret-key. The third and last role involved is the user/owner/administrator *U_{C}* of the community of devices. The secret-key issuer is key producer and the others are key consumers. The roles *S, P* and *U* need not be distinct.

For notational simplicity we do not explicitly include the dependency on the community though it is normally assumed that such a dependency exists. Also, for simplicity in the exemplary scenario and without loss of generality, we assume that there are only four devices, i.e. *N*=4*.*

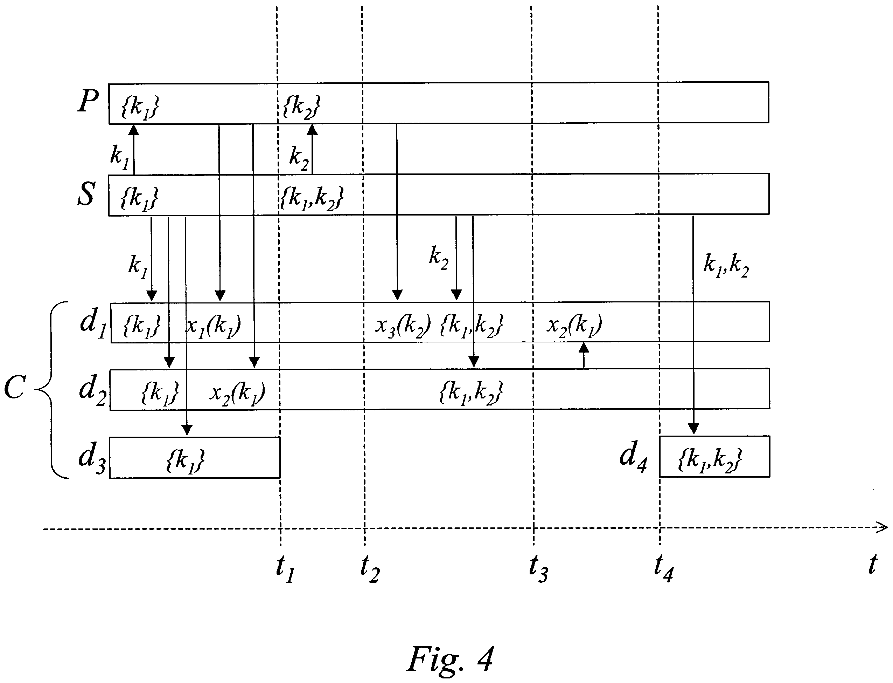

In order to appreciate and at the same time highlight some of the problems related to conventional key management, reference will first be made to the prior art Fig. 4. *S* has generated a first secret key *k₁,* which it shares with *d₁, d₂* and *d₃*. Device *d₄* is not yet a member of the community. Assume also that we have data *x₁*, protected with *k₁* on *d₁,* and that we have data *x₂,* also protected with *k₁* on device *d₂.* At time *t₁,* device *d₃* voluntarily or involuntarily leaves the community. In the former case, *d₃* informs S of the departure, in the latter case, S gets this information from some other source or takes the decision unilaterally. S makes this departure known to P, with the implication that P should no longer provide new data to the community of devices in such a way that it is possible for *d₃* to get access to it.

At time *t₂* (*t₂* > *t₁*)*,* device *d₁* requests new data *x₃* from P. At this point, *P* will know that it cannot provide data protected with *k₁* anymore, so it will ask S for a new key, *k₂* and provide *x₃* to *d₁* protected with *k₂.* Device *d₁,* recognizing that it is not in possession of *k₂,* will turn to *S* to acquire it. After authenticating as *d₁, k₂* is securely transferred to *d₁.* If *d₁* later on would like to provide *x₃* to *d₂,* the same thing will happen; *d₂* will recognize that it is not in possession of *k₂* (unless it recently asked for new protected data from P) and will contact S to acquire this data.

At time *t₃* (*t₃* > *t₂*), *d₂* transfers *x₂* to *d₁.* When this happens, there are a couple of possibilities:
*a.* Device *d₁* did not delete *k₁* when it received *k₂* but kept *k₁* for future use
*b.* Device *d₁* does not know anymore about *k₁*

In case *a,* there is a need for devices to store all shared secret keys *k₁,* ..., *k_{M}* for all communities *C₁,...,C_{L}* they have been members of. In case *b,* there would be a need for *d₁* to contact *S* and ask for key *k₁.* The cost in this case is an increased number of interactions with S, and a requirement for *S* to store all shared secret keys for all communities they interact with.

Likewise, assume that at time *t₄* (*t₄* > *t₃*) device *d₄* registers with S as a member of the community. In order for *d₄* to get access to all data provided to the community, *S* would have to be able to provision *d₄* with *k₁,* ..., *k_{M}*, either directly or through a number of iterations, once again implying a need for local storage of previous keys in the key-issuer *S*.

The invention is applicable to these scenarios, mixed versions and other key/data distribution procedures. In particular, an exemplary application of the present invention is the sharing of content or licenses among devices in a Digital Rights Management (DRM) scenario, in which case *P* may be a content provider, *S* a license issuer, and R one or more content-consuming devices. Another application is group key management for file sharing in a Personal Area Network, in which case we may have *S* = *U* = *P.* As indicated, other applications include store-and-forward applications and applications for securing on-line sessions. Still many other applications are also possible.

A basic idea according to the invention involves replacing, at key update, an older key generation stored on the key-consuming side by the new key generation, and iteratively applying, whenever necessary, a predetermined *one-way* key derivation function to derive at least one older key generation from the new key generation. This reduces the storage requirements on the key-consuming side considerably, since only the latest key generation needs to be stored in an optimized implementation. Older keys are efficiently derived using the key derivation function.

The invention is thus based on defining a relationship between generations of keys such that earlier generation of keys efficiently may be derived from later ones but not the other way around. On the key producing side, there are then at least two main possibilities for generating key information based on the predetermined one-way key derivation function. In general, the key generations may be produced "backwardly" from some initial or otherwise given key information using a one-way key derivation function or in a "forward" fashion from the current key generation using a trapdoor of the key derivation function. In the former case, the key generations are produced backwardly starting from key information of any predetermined generation, such as the key information of a master key generation or any intermediate key generation initially known only to the producing side.

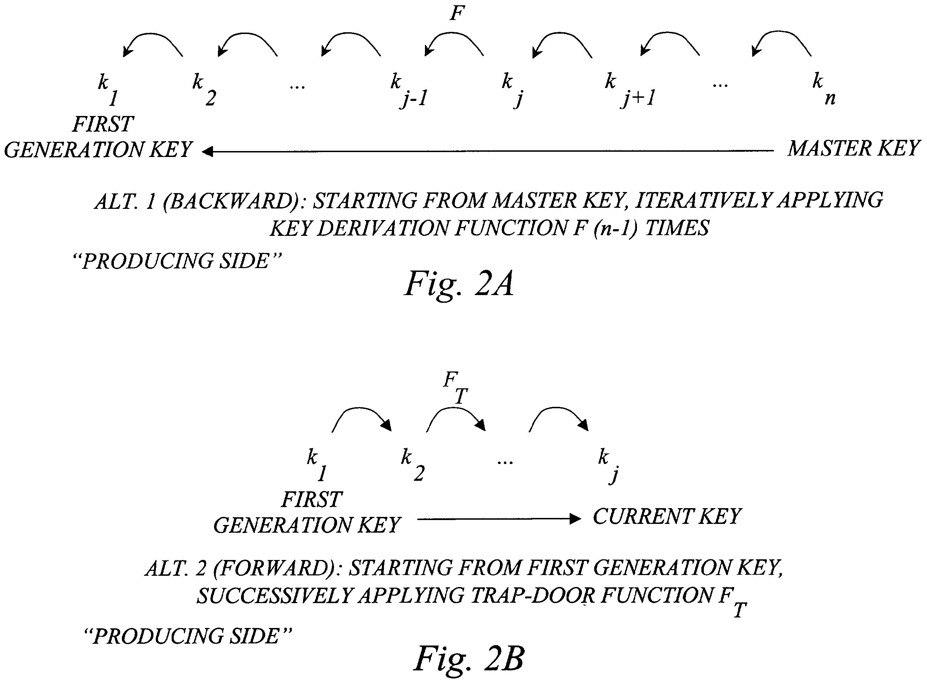

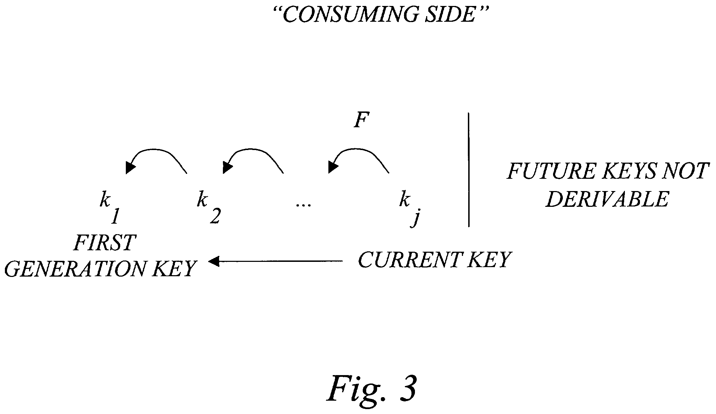

Below is an outline of some basic steps in a first exemplary embodiment of the invention.
1. The key producer preferably generates and stores a random master key *kₙ* (a pseudo-random number with the desired number of bits) and derives, by iterated application of a key derivation function F, sufficiently many (*n*) generations of data/session keys for the application in mind (Fig. 2A).
2. For simplicity, the key generations are preferably enumerated in reverse order, starting with the last derived key as generation 1 and so forth up until the *n*:th generation; *k₁, k₂, ..., kₙ.*
3. The key issuer distributes the first generation key using any suitable key distribution technique, e.g. ISO 11770-3 [7] or ANSI X9.44 [8].
4. At key update, the next generation key is distributed, again using any suitable key distribution technique. On the sending side, the relevant key generation is efficiently derived from the stored master key.
5. On the receiving side, the old generation key is deleted and replaced by the latest generation key. Older keys are efficiently derived using the predetermined key derivation function , whenever necessary. If an entity on the key-consuming side has access to key *kⱼ* of generation *j* then key *kᵢ* of generation *i*, where *i* < j, can be derived by using the key derivation function *F* (Fig. 3).

To generate a next key generation, the key-producing side may simply apply the key derivation function *n-1* iterations, and so forth. This means that the producing side only has to store the master key and the current generation number.

The function used to derive old keys from new keys should be designed such that it is infeasible for a consumer to derive new keys from old keys (Fig. 3). This implies that the function must be computationally hard to reverse, or "one-way". Cryptographic hash functions like SHA-256 ([6]) meet this requirement. Further, an efficient key derivation function eliminates any dimensioning problem, allowing a good margin for what is meant by "sufficiently many generations".

A function based on a public-key cryptosystem (which is a one-way function with a so-called trapdoor), where the consumer only knows the public key would also meet the requirement. Such a function would make it possible for the producer to use the trapdoor (private key) to go "forward" in the chain, alleviating the need to pre-generate later key generations.

Below is an outline of some basic steps in a second exemplary embodiment of the invention, based on a one-way function with a trapdoor, e.g. exponentiation modulo a composite integer (note that the keys in this case may be longer than those in the approach based on a one-way function without a trapdoor, due to the larger output size of known trapdoor one-way functions with comparable security).
1. The key producer generates a first generation key *k₁* (a pseudo-random number with the desired number of bits).
2. The key issuer distributes the first generation key using any suitable key distribution technique, e.g. ISO 11770-3 [7] or ANSI X9.44 [8].
3. At key update, the next generation key is distributed, again using any suitable key distribution technique. The relevant key generation is efficiently derived from the previous, old generation by using a trapdoor *F_{T}* of a predetermined one-way key derivation function (Fig. 2B).
4. On the receiving side, the old generation key is deleted and replaced by the latest generation key. Older keys are efficiently derived using the predetermined key derivation function as described above (Fig. 3), whenever necessary.

As indicated above, an important aspect of the invention is about defining a relation between the different generations of shared keys *k₁, k₂,* ..., *kᵢ, ...kₙ.* The invention allows for a variety of trust models. However as a general feature, if an entity is trusted with access to key *kⱼ* of generation *j* then, subject to certain optional restrictions, the entity is also trusted with access to key *kᵢ* of generation *i,* where *i* < j.

The invention involves the use of an efficient function that allows a trusted device given the *j*:th generation key as input using this function and possibly other parameters to obtain older keys *k₁,* ..., *kⱼ₋₁* as output, but where it is infeasible to obtain any newer keys *kₘ*, *m* > *j* based on the given or obtained information. Other input parameters may include an access code/Personal Identification Number (PIN) known by the trusted administrator/owner/user *U*. For example, the access code may be provided to the user of a device from a content provider or an intermediate party, e.g. at purchase of a service or some digital content. It may be displayed on-line, or securely transferred to the user's device or even sent by ordinary mail or by fax to the user. To activate the service or gain access to the digital content, the user then has to enter the access code. Without this parameter or with the parameter set to a default value if no value is provided, the function may fail to derive a key or derives an incorrect key. Other variants include restricted access to keys of certain age, so there is a cut-off time beyond which no keys are possible to derive without the appropriate code or PIN. The objective of such parameters may be to restrict access to older generations of keys and only to trusted administrators/owners/users *U* of the devices, e.g. in the case when devices are stolen, lost or sold. Yet another input parameter may be the current key generation number itself, effectively creating a new key derivation function for each key generation.

An exemplary manifestation of this invention is to define a computationally efficient function *F* between consecutive generations *kⱼ₋₁* = *F*(*kⱼ,* ...), 1 < *j* ≤ *n* where the ellipsis indicates other possible parameters as mentioned above. With this construction, the trusted device can apply the function *F* iteratively a number of times to obtain any desired old key *kᵢ,* 1 ≤ *i* < *j.*

A preferred embodiment is that of using a realization of a cryptographic one-way function *F* to ensure the unfeasibility of obtaining information of later generation keys than already known.

As an example, the concept of a hash chain is used. Let *F* be a cryptographic hash function *f* of one parameter, which outputs *m*-bit numbers to a given input number. Denote by *n* an estimated lower bound of the necessary number of generations for the relevant system. Let *kₙ* be a random *m*-bit number, and define recursively *kⱼ₋₁* =*f*(*kⱼ*) for 1 <*j*≤*n.*

An application of this example may be *f* = SHA-256, *m* = 256 (bits) and *n* well above the anticipated number of revocations or periodic key updates in one set of devices. Note that this number may well be higher than the number of devices in the community at any given point in time. Since the community is dynamic, new devices may join (and leave or become revoked) at any point during the lifetime of the community.

As another example, an iteration of a key derivation function is used. Let *F be* a key derivation function *KDF,* which is one-way and takes an arbitrary number of input parameters. Denote by *n* an estimated lower bound of the necessary number of generations for the relevant system. Let *kₙ* be a random m-bit number, and define recursively *kⱼ₋₁* = *KDF(kⱼ,...)* for 1 <*j*≤*n.*

An application of this example may be *KDF* = kdConcatenation, *m* = 128 (bits) and *n* well above the anticipated number of revocations in one set of devices as above.

The definition of the kdConcatenation key derivation function can be found in [1], and has the advantage of allowing other information such as the discussed use of a PIN to be included in the key derivation:
*"The optional input variable OtherInfo may be used when appropriate, for example, to delimit the intended use of the key..."* (*ANSI X9.42-2000 [1])*

As a third example, the combined concept of a hash chain and the iterated application of a one-way key derivation function is used. Again, let *F* be a key derivation function KDF, and let *f* be a cryptographic hash function of one variable, which outputs *m*-bit numbers to a given input number. Denote by *n* an estimated lower bound of the necessary number of generations for the relevant system. Let *kₙ* be a random m-bit number, and define recursively *kⱼ₋₁* = *KDF(f(kⱼ),...)* for 1 <*j*≤*n.*

An application of this example may be *KDF* = kdConcatenation, *f* = SHA-1, *m* = 160 (bits) and *n* well above the anticipated number of revocations in one set of devices as above..

Again, the definition of the kdConcatenation key derivation function can be found in [1], and has the advantage of allowing other information such as the discussed use of a PIN to be included in the key derivation.

An alternative embodiment is that of using a realization of a cryptographic one-way function *F* with a so-called trapdoor *F_{T}* to ensure the unfeasibility of obtaining information of later generation keys than already known for a consumer, but at the same time have the possibility for the producer to use the trapdoor to obtain next generation keys. In practice, such a function is generally less efficient than simple one-way functions. However, an advantage would be that the producer does not need to pre-compute a chain of generation keys, but can given the current generation key and the trapdoor function compute the next generation key, i.e., *kⱼ₊₁ = F_{T}(kⱼ,* ...). This also gives the added advantage that the number of generations is not limited as in e.g., a hash chain based case (where the maximum number of generations is limited to the length of the hash chain).

It should be understood that the key information generated by iteratively applying the general key derivation function F may subsequently be transformed into the actual cryptographic key. This may involve changing the key size and/or other transformations of the key material. For example, a 160-bits key produced by using a SHA-1 hash function may be mapped into a 128-bits AES key.

The concept of a hash chain as such is known, e.g. from references [1], [3], and [4], but in completely different application areas. The Micali certificate revocation system is mainly addressing the problem of efficient revocation checking by avoiding repeated heavy verifications of signatures and instead exposing inverse images in a hash chain, images which are efficiently verified. The Lamport hash chain system described in [3] and [4] allows an authentication server to store a tuple <*n,* hashⁿ(*password*)> for each client, and upon receiving an authentication request from the client transmit *n*-1 to the client (hash*ⁿ*(.) denotes the *n* times repeated composition of the hash function: hash*ⁿ*(*x*)=hash(hash(... hash(*x*) ...))). The client then computes s = hashⁿ⁻¹(*password*) and sends *s* to the authentication server. The authentication server authenticates the client by verifying that hash(*s*) = hashⁿ(*password*), and if successful, replaces the tuple with <*n*-1, hashⁿ⁻¹(*password*)>*.*

Returning to the exemplary scenarios 1, 2, and 3 presented above, it can now be seen how the invention would apply.

### Application to scenario 1:

To fulfil the objectives of this scenario it is sufficient if S stores the master key *kₙ*, associated generation number *n* and the current generation number *i*; or if the trapdoor variant is used then S needs only to store the current session key *kᵢ* and the corresponding generation number *i*. Independently of this, R needs only to store the current session key *kᵢ* and the corresponding generation number *i*.

### Application to scenario 2:

Using the same embodiment of the invention as described in the application to scenario 1, it is sufficient if S stores *n, kₙ*, and the current generation number *i*, and if R stores the current session key *kᵢ* and the generation number *i*. The implementation of the predetermined one-way key derivation function on the key-consuming side enables R to communicate based on any older key generation, even though one or more previous key updates have been missed.

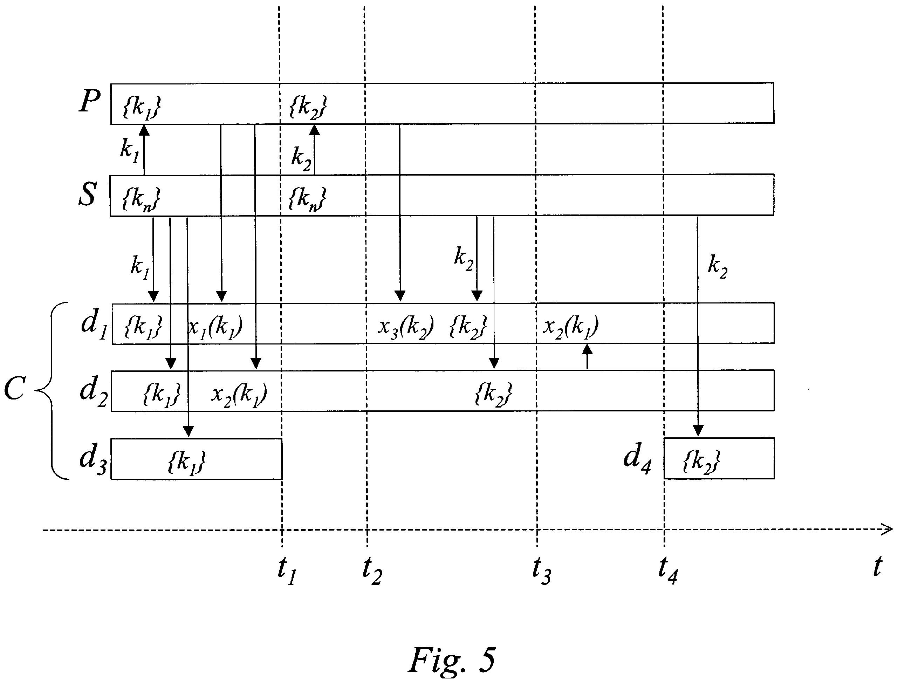

### Application to scenario 3 (referring to Fig. 5):

This embodiment of the invention relates to key management in a community of devices, including the issue of how to optimize exclusion of a device from the community, e.g. as a result of a device voluntarily or involuntarily leaving the community.

The invention alleviates the aforementioned problems and allows restricted storage requirements in *S* and all devices *d₁* through *d_{N},* while at the same time enabling newly adjoined devices to share old data even in the case of a large number of preceding revocations. The invention also presents efficient distribution of new, shared keys within the community, and alleviates the need to keep track of any missing previous key updates. For example, once a device has access to the latest key generation it can communicate and share protected data also based on any of the older generations, even though the device may have been previously turned off for a while and missed one or more previous key updates.

In fact, the implementation of the predetermined one-way key derivation function enables group devices with access to the new key generation to communicate not only by use of the new key generation, but also based on any older key generation. In practice, this means that such group devices may communicate, e.g. with each other, with a provider of data protected by any of the key generations, and also with devices without access to the new key generation but which do have access to older key generations.
- At time *t₂, d₁* turns to *P* to acquire *x₃*. *P,* knowing about the need for a new key, acquires *k₂* from *S*, which in turn generates *k₂* by applying *F* on *kₙ* one time less than it did for *k*₁*,* or alternatively by applying the trap-door function *F_{T}* on *k*₁*. P* then protects *x₃* with *k₂* and transmits the protected *x₃* to *d₂.*
- Having received *x₃*, *d₁* recognizes that it needs access to *k₂.* Device *d₁* therefore contacts *S* and receives, possibly after being authenticated, *k₂.* At this point, *d₁* replaces *k₁* with *k₂* in its internal storage and makes a note of *k₂*'s generation number.
- When *d₁* later on forwards *x₃* to *d₂, d₂* will, in a similar fashion, need to contact *S* to acquire *k₂,* and once received, replace *k₁* in its internal storage with *k₂* and make a note of its generation number.
- At time *tⱼ, d₂* forwards *x₂* to *d₁.* Device *d₁* will recognize that *x₂* is protected with *k₁,* an earlier generation of *k₂,* and will simply apply *F*(*k₂,...*) to arrive at *k₁* and subsequently decrypt *x₂.*
- At time *t₄,* the new device *d₄* registers into the domain. Device *d₄* will receive *k₂* and information about its generation number from *S* - note that *S* need not send down information about earlier the earlier key *k₁.* Any data in the community that is forwarded to *d₄* after this point (and as long as *d₄* is a registered member of the community) will be legible for *d₄* (but not for *d₃*) thanks to the invention. If the provided data is protected with an earlier key like *k₁, d₄* applies *F(k₂,...)* to arrive at that key, thereby concluding scenario 3.

### REFERENCES

[1] ANSI X9.42-2000, Public Key Cryptography for The Financial Services Industry: Agreement of Symmetric Keys Using Discrete Logarithm Cryptography, American National Standards Institute, 2000.
[2] US Patent No. 5,666,416, *Certificate revocation system,* by Micali, S.
[3] Password Authentication with Insecure Communication, by Lamport, L. Communications of the ACM 24, 11, November 1981, pp. 770-772. Available at http://research.microsoft.com/users/lamport/pubs/password.pdf
[4] US Patent No. 5,751,812, *Re-initialization of an iterated hash function secure password system over an insecure network connection* by Anderson, M.
[5] Handbook of Applied Cryptography, pp. 543-590, by A. Menezes, P. van Oorschot and S. Vanstone.
[6] Federal Information Processing Standards Publication 180-2, "Specifications for the SECURE HASH STANDARD", February 2004. Available at: http://csrc.nist.gov/publications/fips/fips180-2/fips180-2withchangenotice.pdf
[7] ISO/IEC 11770-3:1999, Information technology - Security techniques - Key management - Part 3: Mechanisms using asymmetric techniques.
[8] ANSI X9.44-2003 (Draft 6): Public Key Cryptography for the Financial Services Industry: Key Establishment Using Integer Factorization Cryptography, Draft 6, 2003.

## Claims

1. A method of managing generations of security key information in an information environment comprising a key-producing side (10) generating and distributing key information to a key-consuming side (20, 30), said method comprising the steps of:
- distributing, at key update, key information of a new key generation from the key-producing side to the key-consuming side;
- replacing, on the key-consuming side, key information of an older key generation by the key information of the new key generation;
- iteratively applying a predetermined one-way key derivation function on the key-consuming side to derive key information of at least one older key generation from the key information of the new key generation,
wherein the key-consuming side comprises at least one communication device (30) and a provider (20) of protected data for said at least one communication device, and the key-producing side comprises a key-issuing server (10) issuing security key information to be shared by said at least one communication device (30) and said provider (20) of protected data.

2. The method of claim 1, wherein the key-producing side generates the key information of said new key generation by iteratively applying the predetermined one-way key derivation function starting from key information of a predetermined generation.

3. The method of claim 2, wherein said predetermined key generation is a master key generation.

4. The method of claim 1, wherein the key-producing side generates key information of said new key generation by applying a trap-door function of the predetermined one-way key derivation function starting from key information of any older key generation.

5. The method of claim 1, wherein said step of iteratively applying a predetermined one-way key derivation function to derive key information of at least one older key generation enables the key-consuming side to use any older key generation in the information environment even though one or more previous key updates have been missed.

6. The method of claim 1, wherein said at least one communication device (30) comprises a group of devices, each of which implements the predetermined one-way key derivation function, thereby enabling each group device with access to the new key generation to communicate also based on any older key generation.

7. The method of claim 6, wherein group devices with access to the new key generation are enabled to share protected data also based on any older key generation.

8. The method of claim 1, wherein said key-issuing server (10) and said provider (20) of protected data are integrated.

9. The method of claim 1, wherein said one-way key derivation function is implemented in a device on the key-consuming side for generating key information of said at least one older key generation from key information of the new key generation provided that additional data in the form of a predetermined access code is applied to the key derivation function.

10. The method of claim 1, wherein the key information derived by iteratively applying said one-way key derivation function directly corresponds to a cryptographic key.

11. The method of claim 1, further comprising the step of transforming said derived key information into a cryptographic key.

12. The method of claim 1, wherein said key-derivation function is based on a cryptographic hash function.

13. The method of claim 1, wherein said security key information is used for Digital Rights Management in a digital content distribution system, on-line gaming, file sharing in a Local or Personal Area Network, store-and-forward applications or for securing on-line sessions.

14. An arrangement for managing generations of security key information in an information environment having a key-producing side (10) for generating and distributing key information to a key-consuming side (20, 30), said arrangement comprising:
- means for distributing, at key update, key information of a new key generation from the key-producing side to the key-consuming side;
- means for replacing, on the key-consuming side, key information of an older key generation by the key information of the new key generation;
- means for iteratively applying a predetermined one-way key derivation function on the key-consuming side to derive key information of at least one older key generation from the key information of the new key generation,
wherein the key-consuming side comprises at least one communication device (30) and a provider (20) of protected data for said at least one communication device, and the key-producing side comprises a key-issuing server (10) for issuing security key information to be shared by said at least one communication device and said provider of protected data.

15. The arrangement of claim 14, further comprising means for generating, on the key-producing side, the key information of said new key generation by iteratively applying the predetermined one-way key derivation function starting from key information of a predetermined key generation.

16. The arrangement of claim 15, wherein said predetermined key generation is a master key generation.

17. The arrangement of claim 14, further comprising means for generating, on the key-producing side, the key information of said new key generation by applying a trap-door function of the predetermined one-way key derivation function starting from key information of any older key generation.

18. The arrangement of claim 14, wherein said means for iteratively applying a predetermined one-way key derivation function to derive key information of at least one older key generation is operable for enabling the key-consuming side to use any older key generation in the information environment even though one or more previous key updates have been missed.

19. The arrangement of claim 14, wherein said at least one communication device (30) comprises a group of devices, each of which comprises means for iteratively applying said one-way key derivation function, thereby enabling each group device with access to the new key generation to communicate also based on any older key generation.

20. The arrangement of claim 19, wherein group devices with access to the new key generation are enabled to share protected data also based on any older key generation.

21. The arrangement of claim 14, wherein said key-issuing server (10) and said provider (20) of protected data are integrated.

22. The arrangement of claim 14, wherein said means for iteratively applying a one-way key derivation function is implemented in a device on the key-consuming side and configured for generating key information of said at least one older key generation from key information of the new key generation provided that additional data in the form of a predetermined access code is applied to the key derivation function.

23. The arrangement of claim 14, wherein said means for iteratively applying a one-way key derivation function is operable for deriving key information that directly corresponds to a cryptographic key.

24. The arrangement of claim 14, further comprising means for transforming said derived key information into a cryptographic key.

25. The arrangement of claim 14, wherein said key-derivation function is based on a cryptographic hash function.

26. The arrangement of claim 14, wherein said security key information is used for Digital Rights Management in a digital content distribution system, on-line gaming, file sharing in a Local or Personal Area Network, store-and-forward applications or for securing on-line sessions.

27. A security-key consuming entity in the form of a communication device (30) or a provider (20) of protected data for such a communication device in an information environment, said security-key consuming entity comprising:
- means for receiving, at key update, key information of a new key generation;
- means for replacing key information of an older key generation stored in said security-key consuming entity by the key information of the new key generation;
- means for iteratively applying, whenever necessary, a predetermined one-way key derivation function to derive key information of at least one older key generation from the key information of the new key generation.

## Patentansprüche

1. Ein Verfahren zum Verwalten von Erzeugungen von Sicherheitsschlüsselinformationen in einer Informationsumgebung, die eine Schlüsselerzeugerseite (10) umfasst, die Schlüsselinformationen erzeugt und an eine Schlüsselverbraucherseite (20, 30) verteilt, wobei das Verfahren die folgenden Schritte umfasst:
Verteilung von Schlüsselinformationen einer neuen Schlüsselerzeugung bei der Schlüsselaktualisierung von der Schlüsselerzeugerseite auf die Schlüsselverbraucherseite;
Ersetzung von Schlüsselinformationen einer älteren Schlüsselerzeugung durch die Schlüsselinformationen der neuen Schlüsselerzeugung;
iteratives Anwenden einer vorbestimmten Einweg-Schlüssel-Ableitungsfunktion auf der Schlüsselverbraucherseite, um Schlüsselinformationen von mindestens einer älteren Schlüsselerzeugung aus den Schlüsselinformationen der neuen Schlüsselerzeugung abzuleiten,
wobei die Schlüsselverbraucherseite mindestens eine Kommunikationsvorrichtung (30) und einen Anbieter (20) von geschützten Daten für die mindestens eine Kommunikationsvorrichtung umfasst, und die Schlüsselerzeugerseite einen Schlüsselausgabeserver (10) umfasst, der Sicherheitsschlüsselinformationen ausgibt, die von der mindestens einen Kommunikationsvorrichtung (30) und dem Anbieter (20) von geschützten Daten gemeinsam genutzt werden.

2. Das Verfahren nach Anspruch 1, wobei die Schlüsselerzeugerseite die Schlüsselinformationen der neuen Schlüsselerzeugung durch iteratives Anwenden der vorbestimmten Einweg-Schlüssel-Ableitungsfunktion ausgehend von Schlüsselinformationen einer vorbestimmten Erzeugung erzeugt.

3. Das Verfahren nach Anspruch 2, wobei die vorbestimmte Schlüsselerzeugung eine Generalschlüsselerzeugung ist.

4. Das Verfahren nach Anspruch 1, wobei die Schlüsselerzeugerseite Schlüsselinformationen der neuen Schlüsselerzeugung erzeugt, indem sie eine Sperrfunktion der vorbestimmten Einweg-Schlüssel-Ableitungsfunktion anwendet, ausgehend von Schlüsselinformationen einer beliebigen älteren Schlüsselerzeugung.

5. Das Verfahren nach Anspruch 1, wobei der Schritt des iterativen Anwendens einer vorbestimmten Einweg-Schlüssel-Ableitungsfunktion zur Ableitung von Schlüsselinformationen mindestens einer älteren Schlüsselerzeugung es der Schlüsselverbraucherseite ermöglicht, jede ältere Schlüsselerzeugung in der Informationsumgebung zu verwenden, obwohl eine oder mehrere frühere Schlüsselaktualisierungen verpasst wurden.

6. Das Verfahren nach Anspruch 1, wobei die mindestens eine Kommunikationsvorrichtung (30) eine Gruppe von Vorrichtungen umfasst, von denen jede die vorbestimmte Einweg-Schlüssel-Ableitungsfunktion implementiert, wodurch es jeder Gruppenvorrichtung mit Zugriff auf die neue Schlüsselerzeugung ermöglicht wird, auch auf der Grundlage einer älteren Schlüsselerzeugung zu kommunizieren.

7. Das Verfahren nach Anspruch 6, bei dem Gruppenvorrichtungen mit Zugriff auf die neue Schlüsselerzeugung in die Lage versetzt werden, geschützte Daten auch basierend auf einer beliebigen älteren Schlüsselerzeugung gemeinsam zu nutzen.

8. Das Verfahren nach Anspruch 1, wobei der Schlüsselausgabeserver (10) und der Anbieter (20) von geschützten Daten integriert sind.

9. Das Verfahren nach Anspruch 1, wobei die Einweg-Schlüssel-Ableitungsfunktion in einer Vorrichtung auf der Schlüsselverbraucherseite zum Erzeugen von Schlüsselinformationen der mindestens einen älteren Schlüsselerzeugung aus Schlüsselinformationen der neuen Schlüsselerzeugung implementiert ist, vorausgesetzt, dass zusätzliche Daten in Form eines vorbestimmten Zugangscodes auf die Schlüsselableitungsfunktion angewendet werden.

10. Das Verfahren nach Anspruch 1, wobei die Schlüsselinformation, die durch iteratives Anwenden der Einweg-Schlüssel-Ableitungsfunktion abgeleitet wird, direkt einem kryptographischen Schlüssel entspricht.

11. Das Verfahren nach Anspruch 1, das ferner den Schritt des Transformierens der abgeleiteten Schlüsselinformationen in einen kryptographischen Schlüssel umfasst.

12. Das Verfahren nach Anspruch 1, wobei die Schlüsselableitungsfunktion auf einer kryptographischen Hash-Funktion basiert.

13. Das Verfahren nach Anspruch 1, wobei die Sicherheitsschlüsselinformationen für das Digital Rights Management in einem digitalen Inhaltsverteilungssystem, Online-Gaming, File-Sharing in einem lokalen oder privaten Netzwerk, Store-and-Forward-Anwendungen oder zur Sicherung von Online-Sitzungen verwendet werden.

14. Eine Anordnung zum Verwalten von Erzeugungen von Sicherheitsschlüsselinformationen in einer Informationsumgebung mit einer Schlüsselerzeugerseite (10) zum Erzeugen und Verteilen von Schlüsselinformationen an eine Schlüsselverbraucherseite (20, 30), wobei die Anordnung umfasst:
Mittel zum Verteilen von Schlüsselinformationen einer neuen Schlüsselerzeugung bei der Schlüsselaktualisierung von der Schlüsselerzeugerseite auf die Schlüsselverbraucherseite;
Mittel zum Ersetzen von Schlüsselinformationen einer älteren Schlüsselerzeugung auf der Schlüsselverbraucherseite durch die Schlüsselinformationen der neuen Schlüsselerzeugung;
Mittel zum iterativen Anwenden einer vorbestimmten Einweg-Schlüssel-Ableitungsfunktion auf der Schlüsselverbraucherseite, um Schlüsselinformationen von mindestens einer älteren Schlüsselerzeugung aus den Schlüsselinformationen der neuen Schlüsselerzeugung abzuleiten, wobei die Schlüsselverbraucherseite mindestens eine Kommunikationseinrichtung (30) und einen Anbieter (20) von geschützten Daten für die mindestens eine Kommunikationseinrichtung umfasst, und die Schlüsselerzeugerseite einen Schlüsselausgabeserver (10) zur Ausgabe von Sicherheitsschlüsselinformationen umfasst, die von der mindestens einen Kommunikationsvorrichtung und dem Anbieter geschützter Daten gemeinsam zu nutzen sind.

15. Die Anordnung von Anspruch 14, die weiter Mittel umfasst, um auf der Schlüsselerzeugerseite die Schlüsselinformationen der neuen Schlüsselerzeugung durch iteratives Anwenden der vorbestimmten Einweg-Schlüssel-Ableitungsfunktion ausgehend von Schlüsselinformationen einer vorbestimmten Schlüsselerzeugung zu erzeugen.

16. Die Anordnung von Anspruch 15, wobei die vorbestimmte Schlüsselerzeugung eine Generalschlüsselerzeugung ist.

17. Die Anordnung nach Anspruch 14, die weiter Mittel umfasst, um auf der Schlüsselerzeugerseite die Schlüsselinformationen der neuen Schlüsselerzeugung durch Anwenden einer Sperrfunktion der vorbestimmten Einweg-Schlüssel-Ableitungsfunktion ausgehend von Schlüsselinformationen einer beliebigen älteren Schlüsselerzeugung zu erzeugen.

18. Die Anordnung von Anspruch 14, wobei die Mittel zum iterativen Anwenden einer vorbestimmten Einweg-Schlüssel-Ableitungsfunktion, um Schlüsselinformationen von mindestens einer älteren Schlüsselerzeugung abzuleiten, so betreibbar sind, dass die Schlüsselverbraucherseite in der Informationsumgebung jede ältere Schlüsselerzeugung verwenden kann, obwohl eine oder mehrere frühere Schlüsselaktualisierungen verpasst wurden.

19. Die Anordnung nach Anspruch 14, wobei die mindestens eine Kommunikationsvorrichtung (30) eine Gruppe von Vorrichtungen umfasst, von denen jede Mittel zum iterativen Anwenden der Einweg-Schlüssel-Ableitungsfunktion umfasst, wodurch es jeder Gruppenvorrichtung mit Zugriff auf die neue Schlüsselerzeugung ermöglicht wird, auch basierend auf einer älteren Schlüsselerzeugung zu kommunizieren.

20. Die Anordnung nach Anspruch 19, bei der Gruppenvorrichtungen mit Zugriff auf die neue Schlüsselerzeugung in die Lage versetzt werden, geschützte Daten auch auf Basis einer beliebigen älteren Schlüsselerzeugung gemeinsam zu nutzen.

21. Die Anordnung nach Anspruch 14, wobei der Schlüsselausgabeserver (10) und der Anbieter (20) von geschützten Daten integriert sind.

22. Die Anordnung nach Anspruch 14, wobei die Mittel zur iterativen Anwendung einer Einweg-Schlüssel-Ableitungsfunktion in einer Vorrichtung auf der Schlüsselverbraucherseite implementiert und konfiguriert sind, um Schlüsselinformationen der mindestens einen älteren Schlüsselerzeugung aus Schlüsselinformationen der neuen Schlüsselerzeugung zu erzeugen, vorausgesetzt, dass zusätzliche Daten in Form eines vorbestimmten Zugangscodes auf die Schlüsselableitungsfunktion angewendet werden.

23. Die Anordnung nach Anspruch 14, wobei die Mittel zum iterativen Anwenden einer Einweg-Schlüssel-Ableitungsfunktion zum Ableiten von Schlüsselinformationen, die direkt einem kryptographischen Schlüssel entsprechen, betreibbar sind.

24. Die Anordnung nach Anspruch 14, die ferner Mittel zum Transformieren der abgeleiteten Schlüsselinformationen in einen kryptographischen Schlüssel umfasst.

25. Die Anordnung nach Anspruch 14, wobei die Schlüsselableitungsfunktion auf einer kryptographischen Hash-Funktion basiert.

26. Die Anordnung von Anspruch 14, wobei die Sicherheitsschlüsselinformationen für Digital Rights Management in einem digitalen Inhaltsverteilungssystem, Online-Gaming, File Sharing in einem lokalen oder privaten Netzwerk, Store-and-Forward-Anwendungen oder zur Sicherung von Online-Sitzungen verwendet werden.

27. Eine Sicherheitsschlüsselverbraucher-Einheit in Form einer Kommunikationsvorrichtung (30) oder eines Anbieters (20) von geschützten Daten für eine solche Kommunikationsvorrichtung in einer Informationsumgebung, wobei die Sicherheitsschlüsselverbraucher-Einheit umfasst:
Mittel zum Empfangen von Schlüsselinformationen einer neuen Schlüsselerzeugung bei der Schlüsselaktualisierung;
Mittel zum Ersetzen von Schlüsselinformationen einer älteren Schlüsselerzeugung, die in der besagten Sicherheitsschlüsselverbraucher-Einheit gespeichert sind, durch die Schlüsselinformationen der neuen Schlüsselerzeugung;
Mittel zum iterativen Anwenden, wann immer erforderlich, einer vorbestimmten Einweg-Schlüssel-Ableitungsfunktion, um Schlüsselinformationen mindestens einer älteren Schlüsselerzeugung aus den Schlüsselinformationen der neuen Schlüsselerzeugung abzuleiten.

## Revendications

1. Procédé de gestion des générations d'informations de clé de sécurité dans un environnement d'informations comprenant un côté de production de clé (10) générant et distribuant des informations de clé à un côté de consommation de clé (20, 30), ledit procédé comprenant les étapes :
- de distribution, lors de la mise à jour de clé, des informations de clé d'une nouvelle génération de clé du côté de production de clé au côté de consommation de clé ;
- de remplacement, du côté de consommation de clé, des informations de clé d'une génération de clé plus ancienne par les informations de clé de la nouvelle génération de clé ;
- d'application de manière itérative d'une fonction de déduction de clé à sens unique prédéterminée du côté de consommation de clé pour déduire les informations de clé d'au moins une génération de clé plus ancienne à partir des informations de clé de la nouvelle génération de clé,
dans lequel le côté de consommation de clé comprend au moins un dispositif de communication (30) et un fournisseur (20) de données protégées pour ledit au moins un dispositif de communication, et le côté de production de clé comprend un serveur d'émission de clé (10) émettant des informations de clé de sécurité à partager par ledit au moins un dispositif de communication (30) et ledit fournisseur (20) de données protégées.

2. Procédé selon la revendication 1, dans lequel le côté de production de clé génère les informations de clé de ladite nouvelle génération de clé en appliquant de manière itérative la fonction de déduction de clé à sens unique prédéterminée en commençant par les informations de clé d'une génération prédéterminée.

3. Procédé selon la revendication 2, dans lequel ladite génération de clé prédéterminée est une génération de clé maître.

4. Procédé selon la revendication 1, dans lequel le côté de production de clé génère les informations de clé de ladite nouvelle génération de clé en appliquant une fonction à porte dérobée de la fonction de déduction de clé à sens unique prédéterminée en commençant par les informations de clé de n'importe quelle génération de clé plus ancienne.

5. Procédé selon la revendication 1, dans lequel ladite étape d'application de manière itérative d'une fonction de déduction de clé à sens unique prédéterminée pour déduire les informations de clé d'au moins une génération de clé plus ancienne permet au côté de consommation de clé d'utiliser n'importe quelle génération de clé plus ancienne dans l'environnement d'informations même si une ou plusieurs mises à jour de clé précédentes ont été manquées.

6. Procédé selon la revendication 1, dans lequel ledit au moins un dispositif de communication (30) comprend un groupe de dispositifs, chacun d'eux mettant en oeuvre la fonction de déduction de clé à sens unique prédéterminée, permettant de ce fait à chaque dispositif du groupe avec un accès à la nouvelle génération de clé de communiquer également sur la base de n'importe quelle génération de clé plus ancienne.

7. Procédé selon la revendication 6, dans lequel les dispositifs du groupe avec un accès à la nouvelle génération de clé sont autorisés à partager des données protégées également sur la base de n'importe quelle génération de clé plus ancienne.

8. Procédé selon la revendication 1, dans lequel ledit serveur d'émission de clé (10) et ledit fournisseur (20) de données protégées sont intégrés.

9. Procédé selon la revendication 1, dans lequel ladite fonction de déduction de clé à sens unique est mise en oeuvre dans un dispositif du côté de consommation de clé pour générer les informations de clé de ladite au moins une génération de clé plus ancienne à partir des informations de clé de la nouvelle génération de clé pourvu que des données supplémentaires sous la forme d'un code d'accès prédéterminé soient appliquées à la fonction de déduction de clé.

10. Procédé selon la revendication 1, dans lequel les informations de clé déduites en appliquant de manière itérative ladite fonction de déduction de clé à sens unique correspondent directement à une clé cryptographique.

11. Procédé selon la revendication 1, comprenant en outre l'étape de transformation desdites informations de clé déduites en une clé cryptographique.

12. Procédé selon la revendication 1, dans lequel ladite fonction de déduction de clé est basée sur une fonction de hachage cryptographique.

13. Procédé selon la revendication 1, dans lequel lesdites informations de clé de sécurité sont utilisées pour la gestion des droits numériques dans un système de distribution de contenu numérique, les jeux en ligne, le partage de fichiers dans un réseau local ou personnel, des applications de stockage et d'acheminement ou pour sécuriser des sessions en ligne.

14. Agencement pour gérer les générations d'informations de clé de sécurité dans un environnement d'informations ayant un côté de production de clé (10) pour générer et distribuer des informations de clé à un côté de consommation de clé (20, 30), ledit agencement comprenant :
- des moyens pour distribuer, lors de la mise à jour de clé, les informations de clé d'une nouvelle génération de clé du côté de production de clé au côté de consommation de clé ;
- des moyens pour remplacer, du côté de consommation de clé, les informations de clé d'une génération de clé plus ancienne par les informations de clé de la nouvelle génération de clé ;
- des moyens pour appliquer de manière itérative une fonction de déduction de clé à sens unique prédéterminée du côté de consommation de clé pour déduire les informations de clé d'au moins une génération de clé plus ancienne à partir des informations de clé de la nouvelle génération de clé,
dans lequel le côté de consommation de clé comprend au moins un dispositif de communication (30) et un fournisseur (20) de données protégées pour ledit au moins un dispositif de communication, et le côté de production de clé comprend un serveur d'émission de clé (10) pour émettre des informations de clé de sécurité à partager par ledit au moins un dispositif de communication et ledit fournisseur de données protégées.

15. Agencement selon la revendication 14, comprenant en outre des moyens pour générer, du côté de production de clé, les informations de clé de ladite nouvelle génération de clé en appliquant de manière itérative la fonction de déduction de clé à sens unique prédéterminée en commençant par les informations de clé d'une génération de clé prédéterminée.

16. Agencement selon la revendication 15, dans lequel ladite génération de clé prédéterminée est une génération de clé maître.

17. Agencement selon la revendication 14, comprenant en outre des moyens pour générer, du côté de production de clé, les informations de clé de ladite nouvelle génération de clé en appliquant une fonction à porte dérobée de la fonction de déduction de clé à sens unique prédéterminée en commençant par les informations de clé de n'importe quelle génération de clé plus ancienne.

18. Agencement selon la revendication 14, dans lequel lesdits moyens pour appliquer de manière itérative une fonction de déduction de clé à sens unique prédéterminée pour déduire les informations de clé d'au moins une génération de clé plus ancienne peuvent être utilisés pour permettre au côté de consommation de clé d'utiliser n'importe quelle génération de clé plus ancienne dans l'environnement d'informations même si une ou plusieurs mises à jour de clé précédentes ont été manquées.

19. Agencement selon la revendication 14, dans lequel ledit au moins un dispositif de communication (30) comprend un groupe de dispositifs, chacun d'eux comprenant des moyens pour appliquer de manière itérative ladite fonction de déduction de clé à sens unique, permettant de ce fait à chaque dispositif du groupe avec un accès à la nouvelle génération de clé de communiquer également sur la base de n'importe quelle génération de clé plus ancienne.

20. Agencement selon la revendication 19, dans lequel les dispositifs du groupe avec un accès à la nouvelle génération de clé sont autorisés à partager des données protégées également sur la base de n'importe quelle génération de clé plus ancienne.

21. Agencement selon la revendication 14, dans lequel ledit serveur d'émission de clé (10) et ledit fournisseur (20) de données protégées sont intégrés.

22. Agencement selon la revendication 14, dans lequel lesdits moyens pour appliquer de manière itérative une fonction de déduction de clé à sens unique sont mis en oeuvre dans un dispositif du côté de consommation de clé et configurés pour générer les informations de clé de ladite au moins une génération de clé plus ancienne à partir des informations de clé de la nouvelle génération de clé pourvu que des données supplémentaires sous la forme d'un code d'accès prédéterminé soient appliquées à la fonction de déduction de clé.

23. Agencement selon la revendication 14, dans lequel lesdits moyens pour appliquer de manière itérative une fonction de déduction de clé à sens unique peuvent être utilisés pour déduire les informations de clé qui correspondent directement à une clé cryptographique.

24. Agencement selon la revendication 14, comprenant en outre des moyens pour transformer lesdites informations de clé déduites en une clé cryptographique.

25. Agencement selon la revendication 14, dans lequel ladite fonction de déduction de clé est basée sur une fonction de hachage cryptographique.

26. Agencement selon la revendication 14, dans lequel lesdites informations de clé de sécurité sont utilisées pour la gestion des droits numériques dans un système de distribution de contenu numérique, les jeux en ligne, le partage de fichiers dans un réseau local ou personnel, des applications de stockage et d'acheminement ou pour sécuriser des sessions en ligne.

27. Entité de consommation de clé de sécurité sous la forme d'un dispositif de communication (30) ou d'un fournisseur (20) de données protégées pour un tel dispositif de communication dans un environnement d'informations, ladite entité de consommation de clé de sécurité comprenant :
- des moyens pour recevoir, lors de la mise à jour de clé, les informations de clé d'une nouvelle génération de clé ;
- des moyens pour remplacer les informations de clé d'une génération de clé plus ancienne mémorisées dans ladite entité de consommation de clé de sécurité par les informations de clé de la nouvelle génération de clé ;
- des moyens pour appliquer de manière itérative, à chaque fois que cela est nécessaire, une fonction de déduction de clé à sens unique prédéterminée pour déduire les informations de clé d'au moins une génération de clé plus ancienne à partir des informations de clé de la nouvelle génération de clé.
